# EUROPÄISCHE PATENTSCHRIFT

(11) **EP 2 132 821 B1**
(45) Veröffentlichungstag und Bekanntmachung des Hinweises auf die Patenterteilung: **30.06.2010**
(21) Anmeldenummer: 08734342.2
(22) Anmeldetag: 01.03.2008
(51) Int. Cl.: H01M 8/06

(54) **ABGASREINIGUNG FÜR EINE BRENNSTOFFZELLE BZW. EINEN BRENNSTOFFZELLENSTAPEL**
EXHAUST GAS PURIFICATION SYSTEM FOR A FUEL CELL OR A FUEL CELL STACK
ÉPURATION D'EFFLUENT GAZEUX POUR UNE PILE À COMBUSTIBLE OU UN EMPILEMENT DE PILES À COMBUSTIBLE

(30) Priorität: 13.03.2007 DE 102007012059
(43) Veröffentlichungstag der Anmeldung: 16.12.2009
(73) Patentinhaber: Forschungszentrum Jülich GmbH, 52425 Jülich (DE)
(72) Erfinder: STÄHLER, Markus, 52349 Düren (DE); MÜLLER, Martin, 53489 Sinzig (DE)
(86) Internationale Anmeldenummer: PCT/DE2008/000368
(87) Internationale Veröffentlichungsnummer: WO 2008/110138

(56) Entgegenhaltungen:
- WO-A-2007/125394
- US-A1- 2004 058 209
- US-A1- 2005 053 813
- US-A1- 2006 054 512
- US-A1- 2007 128 478

## Beschreibung

Die Erfindung betrifft die Abgasreinigung für eine Brennstoffzelle bzw. einen Brennstoffzellenstapel, insbesondere für eine Niedertemperatur Brennstoffzelle, sowie ein Verfahren zum Betreiben eines solchen Stapels.

### Stand der Technik

Eine Direkt-Alkohol-Brennstoffzelle weist eine Kathode, einen Elektrolyten sowie eine Anode auf. Der Kathode wird ein Oxidationsmittel, beispielsweise in Form von Luft und der Anode ein alkoholischer Brennstoff, z. B. in Form eines Methanol-Wasser-Gemisches zugeführt.

Zur Erzielung großer elektrischer Leistungen werden in der Regel mehrere Brennstoffzellen durch verbindende Elemente (bipolare Platten) elektrisch und mechanisch miteinander verbunden. Es entstehen übereinander gestapelte, elektrisch in Serie geschaltete Brennstoffzellen, die so genannten Brennstoffzellenstapel. Sie bestehen aus den bipolaren Platten und den Elektroden-Elektrolyt-Einheiten.

Bei einer Direkt-Methanol-Brennstoffzelle wird der Brennstoff in Form einer Methanol-Wasser-Mischung zugegeben. Bei einer anodenseitigen Kreislaufführung des Brennstoffs wird die abgereicherte, d. h. teilweise umgesetzte Methanol-Wasser-Mischung aus den Anodenräumen abgezogen. Es ist bekannt, dass bei der elektrochemischen Umsetzung nicht nur die Protonen durch die Membran auf die Kathodenseite wandern, sondern auch immer ein nicht zu vernachlässigender Anteil an Wasser und Alkohol, in diesem Fall Methanol. Zusammen mit dem an der Kathode entstehenden Produktwasser würde dieses nicht umgesetzte Methanol über die Kathodenabgasleitung regelmäßig in die Abluft gelangen, was natürlich vermieden werden soll.

Im Stand der Technik wird daher als eine Alternative einem Direkt-Alkohol-Brennstoffzellenstapel auf der Kathodenabgasseite ein Katalytbrenner nachgeschaltet, der die Aufgabe hat, die organischen Bestandteile aus dem Kathodenabgas mit Hilfe des Restsauerstoffs zu verbrennen.

Nachteilig werden heute Direkt-Methanol-Brennstoffzellenstapel aus energetischen Gründen bei einer Temperatur zwischen 70 und 80 °C betrieben. Die dabei austretende Luft auf der Kathodenseite ist in der Regel mit Wasserdampf gesättigt. Zudem wird der Sauerstoff als Oxidationsmittel bei der elektrochemischen Reaktion der Brennstoffzellen regelmäßig verbraucht. Der verbleibende Sauerstoffgehalt beträgt daher im Kathodenabgas je nach Betriebsparameter meistens nur noch einige wenige Prozent oder sogar noch weniger. Somit verbleibt kaum ausreichender Restsauerstoffgehalt für die katalytische Verbrennung.

Als weitere Alternative zur Verringerung der Alkoholemissionen aus einer Direkt-Alkohol-Brennstoffzelle wird in der Literatur eine katalytische Umsetzung in der kathodenseitigen Abgassammelleitung oder eine mit Katalysator beschichtete poröse Schicht vorgeschlagen, die innerhalb eines Kathodenraums einer jeden Brennstoffzelle eine Umwandlung von nicht umgesetztem Alkohol bewirkt.

Ebenfalls bekannt ist die Alternative, den Kathodenabgasstrom einzeln oder als Sammelabgas zunächst in einen Anodenraum einer weiteren oder identischen Brennstoffzelle zu leiten, um dort den nicht umgesetzten Alkohol elektrochemisch umzusetzen. Bei dieser Anordnung gibt es somit nur eine gemeinsame Abführung des Abgases aus dem Anodenraum heraus.

### Aufgabe und Lösung

Aufgabe der Erfindung ist es, eine Brennstoffzelle, bzw. einen Brennstoffzellenstapel zu schaffen, bei der bzw. dem organische Bestandteile, insbesondere nicht umgesetzter Alkohol, Aldehyde oder organische Säuren aus dem Abgas entfernt werden können. Ferner ist es Aufgabe der Erfindung, ein Verfahren zum Betreiben einer solchen Brennstoffzelle, bzw. eines solchen Brennstoffzellenstapels zur Verfügung zu stellen.

Die Aufgabe der Erfindung wird gelöst durch einen Brennstoffzellenstapel mit der Gesamtheit der Merkmale des Hauptanspruchs sowie durch ein Verfahren gemäß Nebenanspruch. Vorteilhafte Ausführungsformen sind den jeweils darauf rückbezogenen Unteransprüchen zu entnehmen.

### Gegenstand der Erfindung

Die Erfindung betrifft einen Brennstoffzellenstapel, der erfindungsgemäß ein zusätzliches Mittel zur Reduzierung der Konzentration an organischen Bestandteilen im Abgas aufweist. Dabei betrifft die Erfindung zwar vorrangig Niedertemperatur-Brennstoffzellen, wie beispielsweise die Direkt-Methanol-Brennstoffzellen, ist aber ebenso auch auf Hochtemperatur-Brennstoffzellen anzuwenden und dort insbesondere auf Hochtemperatur-PEM-Brennstoffzellen.

Im Folgenden wird als vorteilhafte Ausführungsform der Erfindung ein Niedertemperatur-Brennstoffzellenstapel beschrieben. Bei einem Direkt-Alkohol-Brennstoffzellenstapel wird als Brennstoff eine Alkohol-Wasser-Mischung eingesetzt. Neben der elektrochemischen Umsetzung der Alkohol-Wassermischung an der Anode gelangt diese teilweise auch über die Elektrolytmembran auf die Kathodenseite. Das Kathodenabgas, welches in der Regel aus umgesetzter Luft und Produktwasser besteht, enthält somit auch nicht umgesetzten Alkohol und gegebenenfalls weitere organische Verunreinigungen, die es zu entfernen gilt. Als Beispiele für solche Verunreinigungen sind neben den Alkoholen Methanol und Ethanol auch Formaldehyd, Kohlenmonoxid oder Ameisensäure zu nennen.

Im Rahmen der Erfindung wurde gefunden, dass die anodischen Reaktionen in einer Brennstoffzelle dazu genutzt werden können, den in dem Kathodenabgas unerwünschten Alkohol oder sonstige organische Verunreinigungen, wie sie bei einem Direkt-Alkohol-Brennstoffzellenstapel regelmäßig auftreten, zu reduzieren bzw. ganz zu entfernen. Damit ist es möglich, die Konzentration an organischen Verunreinigungen im Kathodenabgas während des Betriebs des Brennstoffzellenstapels regelmäßig sehr gering zu halten oder sogar zu vermeiden.

Bevor das Kathodenabgas in die Abluft freigesetzt wird, wird es daher erfindungsgemäß durch ein zusätzliches Mittel geleitet, welches die organischen Bestandteile aus dem Kathodenabgas regelmäßig reduziert, bzw. ganz in CO₂ und Wasser umsetzt. Vorteilhaft handelt es sich bei dem zusätzlichen Mittel um eine elektrochemische Zelle, die wie eine Brennstoffzelle aufgebaut ist. Diese wird in geeigneter Weise in dem Brennstoffkreislauf angeordnet.

Die zusätzliche elektrochemische Zelle ist in der Lage, den nicht umgesetzten Alkohol oder andere organische Komponenten mit Hilfe des Wassers, bzw. des Wasserdampfs und einer Spannungsquelle gemäß nachfolgender Formel umzusetzen:

CH₃OH + H₂O = → CO₂ + 3 H₂

Dabei wird das zu reinigende Kathodenabgas aus einem Brennstoffzellenstapel als Brenngas über die Anode des zusätzlichen Mittels geleitet. Die Elektroden werden an eine Spannungsquelle angeschlossen. Die angelegte Zellspannung beträgt zwischen 0,2 und 10 V, insbesondere zwischen 0,5 und 5 V. Die angelegte Spannung ist unter anderem von dem auf der Anode angeordneten Katalysator abhängig. Als Katalysator für die Umsetzung der organischen Bestandteile kann ein herkömmlicher Katalysator eingesetzt werden, wie er auch für Alkohol-Brennstoffzellen verwendet wird. Geeignete Katalysatoren sind beispielsweise aus Platin oder aus einer Ruthenium-Platinmischung. Die Kathode hat regelmäßig freien Zugang zur Umgebung, so dass Luftsauerstoff für die elektrochemische Umsetzung an der Kathodenseite an die Kathode gelangen kann. Dies kann beispielsweise vorteilhaft in Form einer auf der Kathode befindlichen, nach außen offenen porösen Schicht realisiert werden.

Die beteiligten Elektrodenreaktionen lauten dabei wie folgt:

| | | |
|---|---|---|
| Anode | CH₃OH + H₂O | → CO₂ + 6 e⁻ + 6 H⁺ |
| Kathode | 1,5 O₂ + 6 e⁻ + 6 H⁺ | → 3 H₂O |

Da die Konzentration an Alkohol oder sonstigen organischen Verunreinigungen im Kathodenabgas des Brennstoffzellenstapels in der Regel sehr gering ist, kann die zur Umwandlung dieser Stoffe eingesetzte weitere elektrochemische Zelle deutlich kleiner ausfallen, als die Brennstoffzellen, die zur Stromerzeugung in dem Stapel angeordnet sind.

Durch die an die zusätzliche elektrochemische Zelle angelegte Spannung können die unerwünschten organischen Verunreinigungen, insbesondere der Alkohol, vorteilhaft elektrochemisch umgewandelt werden. Der dazu benötigte Strom ist in der Regel klein gegenüber dem in dem Brennstoffzellenstapel erzeugten Strom, so dass die Effektivität des gesamten Systems durch die zusätzliche Brennstoffzelle nur unwesentlich verringert wird. Demgegenüber wird aber durch die niedrig gehaltenen Konzentrationen an organischen Verunreinigungen in dem Abgasstrom der Betrieb der Brennstoffzelle auch an sensiblen Orten ermöglicht.

Das erfindungsgemäße Brennstoffzellensystem ist dabei nicht nur auf die bekannten Niedertemperatur-Brennstoffzellen beschränkt, sondern kann auch Anwendung bei den so genannten Hochtemperatur-PEM-Brennstoffzellen finden. Bei diesem Brennstoffzellentyp wird versucht, wasserstoffreiches, kohlenmonoxidhaltiges Gas im Anodenkreislauf zu verwenden. Für den Fall, dass man das CO nicht vollständig entfernen kann, bietet dieses Verfahren die Möglichkeit, die Restgase des Anodenkreislaufes ebenfalls durch eine solche elektrochemische Zelle vom CO und natürlich auch von H₂-Resten zu befreien.

### Spezieller Beschreibungsteil

Nachfolgend wird der Gegenstand der Erfindung anhand eines Ausführungsbeispiels und weiterer Figuren näher erläutert, ohne dass der Gegenstand der Erfindung dadurch beschränkt wird.

### Versuchsaufbau:

Die Anode eines Direkt-Methanol-Brennstoffzellenstapels wurde mit einer Methanollösung, die Kathode mit Luft versorgt. Die Zellzahl betrug 100, die Fläche jeder Zelle 300 cm². Der Luftvolumenstrom betrug insgesamt ca. 3001/min. Mit einem Messgerät wurde die Methanolkonzentration im Abgas gemessen. Um eine direkte Korrelation zwischen Methanolgehalt im Abgas und der an der elektrochemischen Zelle angelegten Spannung unter vergleichbaren Versuchsbedingungen zu erhalten, wurde der Versuch mit einer Spannung V = 1 Volt begonnen. Die elektrochemische Zelle bestand aus drei Zellen, die identisch mit denen im Brennstoffzellenstapel waren. Das Abgas des Stapels wurde in den Anodeneingang der elektrochemischen Zelle geleitet.

Bei der Spannung von 1 Volt betrug der Methanolgehalt im Abgas nach der elektrochemischen Zelle 84 ppm. Die Erhöhung der Zellspannung auf 2 Volt zeigte eine deutliche Reduzierung auf 73 ppm und die weitere Steigerung auf 3 Volt eine Reduzierung auf 50 ppm. Mit den Versuchsergebnissen lässt sich die Funktionsweise des Aufbaus eindeutig belegen.

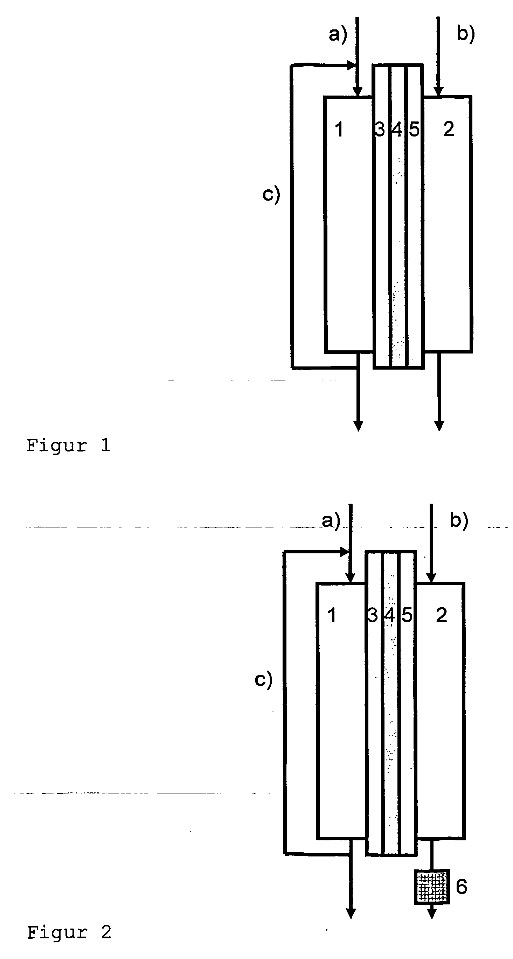

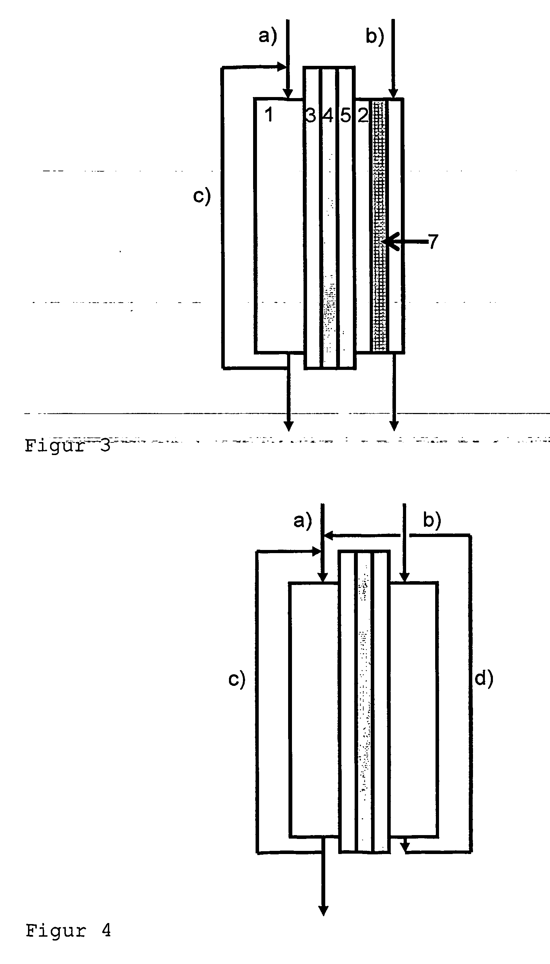

Die Figuren 1 bis 4 zeigen Ausgestaltungen einer Brennstoffzelle stellvertretend für einen Brennstoffzellenstapel aus dem Stand der Technik. In den Figuren bedeuten:
- 1: Anodenraum
- 2: Kathodenraum
- 3: Anode
- 4: Elektrolyt/Membran
- 5: Kathode
- 6: Abgaskatalysator
- 7: poröse, mit Katalysator beschichtete Schicht
- 8: CO₂-Abscheider
- 9: Spannungsquelle
- a): Brennstoff
- b): Oxidationsmittel
- c): Anodenseitige Kreislaufführung
- d): Kathodenseitige Rückführung des Oxidationsmittels in einen Anodenraum
- e): Kathodenabgas zur erfindungsgemäßen Abgasreinigung

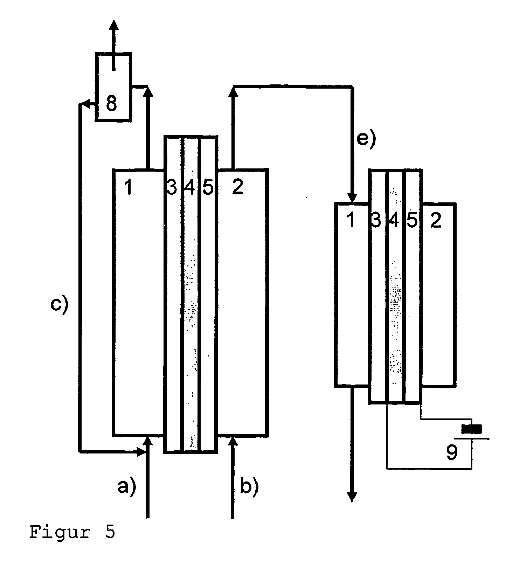

Figur 1 zeigt den schematischen Aufbau einer Brennstoffzelle ohne weitere Abgasbehandlung. In Figur 2 ist im Abgasstrom der Kathode eine Vorrichtung mit einem Abgaskatalysator eingetragen. Figur 3 offenbart-eine Ausführungsform mit einer porösen Wand innerhalb des Kathodenraums, welche mit einem Katalysator beschichtet ist. Ferner ist aus Figur 4 die Alternative ersichtlich, bei der das Kathodenabgas komplett dem Anodenraum zugeführt wird. In Figur 5 wird die Erfindung verdeutlicht. Auf der Kathodenabgasseite schließt sich an die Brennstoffzelle oder den Brennstoffzellenstapel eine weitere elektrochemische Zelle an, die an eine externe Spannungsquelle angeschlossen ist. Das Alkohol und/oder CO aufweisende Kathodenabgas wird als Brennstoff der Anode, dieser Zelle zugeführt, und die unerwünschten Nebenprodukte werden vorteilhaft elektrochemisch umgesetzt. Das dafür benötigte Oxidationsmittel kann beispielsweise durch einfache Diffusion von Luft über eine poröse Wand oder Schicht an die Kathode geführt werden.

## Patentansprüche

1. Brennstoffzellensystem, umfassend wenigstens eine erste Brennstoffzelle mit einer Anode, einer Kathode sowie einem dazwischen angeordneten Elektrolyten, sowie Zuführungen für einen Brennstoff zur Anode und ein Oxidationsmittel zur Kathode, **gekennzeichnet durch** eine im Abgasstrom der Kathode der ersten Brennstoffzelle angeordnete weitere elektrochemische Zelle, die mit einer externen Spannungsquelle verbunden ist, wobei der Kathodenraum der ersten Brennstoffzelle mit dem Anodenraum der weiteren elektrochemischen Zelle verbunden ist.

2. Brennstoffzellensystem nach Anspruch 1, umfassend einen Brennstoffzellestapel aus Direkt-Alkohol-Brennstoffzellen, wobei die weitere elektrochemische Zelle im Abgasstrom der Kathodensammelleitung angeordnet ist.

3. Brennstoffzellensystem nach Anspruch 1 oder 2, bei dem die Kathode der weiteren elektrochemischen Zelle nur durch eine poröse Schicht von der Umgebung getrennt ist.

4. Brennstoffzellensystem nach Anspruch 1 bis 3, bei dem eine Direkt-Alkohol-Brennstoffzelle als weitere Brennstoffzelle eingesetzt wird.

5. Brennstoffzellensystem nach Anspruch 1 bis 4, bei dem jeweils eine Direkt-Alkohol-Brennstoffzelle als erste und als weitere Brennstoffzelle eingesetzt wird.

6. Verfahren zum Betreiben eines Brennstoffzellensystems nach einem der Ansprüche 1 bis 5, bei dem zwischen Anode und Kathode der weiteren elektrochemischen Zelle eine Spannung zwischen 0,5 und 5 V angelegt wird.

7. Verfahren nach Anspruch 6, bei dem zwischen Anode und Kathode der weiteren elektrochemischen Zelle eine Spannung zwischen 0,8 und 2 V angelegt wird.

## Claims

1. Fuel cell system, comprising at least a first fuel cell with an anode, a cathode and an electrolyte arranged between them, as well as feed lines for a fuel to the anode and a means of oxidation to the cathode, **characterised by** a further electrochemical cell arranged in the exhaust gas flow of the cathode of the first fuel cell, which is connected to an external source of voltage, in which the cathode area of the first fuel cell is connected to the anode area of the further electrochemical cell.

2. Fuel cell system according to claim 1, comprising a fuel cell stack made of direct alcohol fuel cells, in which the further electrochemical cell is arranged in the exhaust gas flow of the cathode collecting line.

3. Fuel cell system according to claim 1 or 2, in which the cathode of the further electrochemical cell is only separated from the surroundings by a porous layer.

4. Fuel cell system according to claim 1 to 3, in which a direct alcohol fuel cell is used as the further fuel cell.

5. Fuel cell system according to claim 1 to 4, in which a direct alcohol fuel cell is used as the first and as the further fuel cell.

6. Method for operating a fuel cell system according to one of claims 1 to 5, in which a voltage of between 0.5 and 5 V is applied between the anode and the cathode of the further electrochemical cell.

7. Method according to claim 6, in which a voltage of between 0.8 and 2 V is applied between the anode and the cathode of the further electrochemical cell.

## Revendications

1. Système de cellules à combustible, comprenant au moins une première cellule à combustible avec une anode, une cathode et un électrolyte disposé entre celles-ci, ainsi que des conduits d'amenée pour un combustible vers l'anode et pour un agent oxydant vers la cathode, **caractérisé par** une autre cellule électrochimique disposée dans le flux de gaz d'échappement de la cathode de la première cellule à combustible, laquelle est reliée à une source externe de tension, le compartiment de cathode de la première cellule à combustible étant relié au compartiment d'anode de l'autre cellule électrochimique.

2. Système de cellules à combustible selon la revendication 1, comprenant une pile de cellules à combustible formée de cellules à combustible à alcool direct, l'autre cellule électrochimique étant disposée dans le flux de gaz d'échappement du collecteur de cathode.

3. Système de cellules à combustible selon la revendication 1 ou la revendication 2, où la cathode de l'autre cellule électrochimique n'est séparée que par une couche poreuse de l'environnement.

4. Système de cellules à combustible selon les revendications 1 à 3, où une cellule à combustible à alcool direct est mise en oeuvre comme autre cellule à combustible.

5. Système de cellules à combustible selon les revendications 1 à 4, où une cellule à combustible à alcool direct est respectivement mise en oeuvre comme première cellule à combustible et comme autre cellule à combustible.

6. Procédé d'exploitation d'un système de cellules à combustible selon l'une des revendications 1 à 5, où une tension comprise entre 0,5 et 5 V est appliquée entre l'anode et la cathode de l'autre cellule électrochimique.

7. Procédé selon la revendication 6, où une tension comprise entre 0,8 et 2 V est appliquée entre l'anode et la cathode de l'autre cellule électrochimique.
